# EUROPEAN PATENT SPECIFICATION

(11) **EP 3 314 819 B1**
(45) Date of publication and mention of the grant of the patent: **04.05.2022**
(21) Application number: 16837420.5
(22) Date of filing: 24.05.2016
(51) Int. Cl.: H04L 29/08, G06F 9/54, H04L 12/869, H04L 12/911

(54) **METHOD, MACHINE READABLE MEDIUM, DEVICE AND SYSTEM FOR EVENT DISSEMINATION**
VERFARHEN, COMPUTERLESBARES MEDIUM, VORRICHTUNG UND SYSTEM ZUR EREIGNISVERBREITUNG
PROCÉDÉ, SUPPORT DE DONNÉES LISIBLE PAR ORDINATEUR, APPAREIL ET SYSTÈME DE DISSÉMINATION D'ÉVÉNEMENTS

(30) Priority: 24.06.2015 US 201514748763
(43) Date of publication of application: 02.05.2018
(73) Proprietor: INTEL Corporation, Santa Clara, CA 95054 (US)
(72) Inventor: FLAJSLIK, Mario, Hudson, Massachusetts 01749 (US); DINAN, James, Hudson, Mississippi 01749 (US); UNDERWOOD, Keith D., Powell, Tennessee 37849 (US)
(74) Representative: Rummler, Felix
(86) International application number: PCT/US2016/033963
(87) International publication number: WO 2017/030617

(56) References cited:
- US-A1- 2004 088 716
- US-A1- 2006 184 939
- US-A1- 2012 117 361
- US-A1- 2012 198 477
- US-A1- 2013 246 552
- US-A1- 2014 019 995
- US-A1- 2014 040 912
- US-A1- 2014 101 333
- US-A1- 2014 173 631

## Description

### TECHNICAL FIELD

The present disclosure relates to inter-device communication, and more particularly, to offloading the dissemination of events in a multi-device architecture to a hardware-based system.

### BACKGROUND

As the applications to which computing resources may be applied become more plentiful, so do the variety of computing architectures that may be implemented for these applications. For example, emerging scalable computing systems may comprise a plurality of separate computing devices (e.g., nodes) that may be configured to operate alone or collaboratively to solve complex problems, process large amounts of data, etc. This organization of computing resources may be deemed a high performance computing (HPC) architecture. HPC architectures are able to attack large jobs by breaking the large job into a variety of smaller tasks. The smaller tasks may then be assigned to one or more computing devices in the HPC architecture. When the processing of a smaller task is complete, the result may be returned to at least one master device that may, for example, organize the results of the smaller tasks, send out the results of the smaller tasks to one or more computing devices to perform the next data processing operation, integrate the results of the smaller tasks to generate a result for the larger job, etc. HPC architectures are beneficial at least in that the data processing power of individual computing devices may be concentrated in a quasi-parallelized manner that may be readily scalable to a particular data processing application.

While the various benefits of the above example of collaborative data processing may be apparent, there may be some challenges to operating a collaborative computing architecture. An example system may comprise a plurality of processing nodes each with different characteristics (e.g., processor type, processing power, available storage, different equipment, etc.). Each of the nodes may participate in processing a large job by performing smaller tasks that contribute to the large job. Differently-configured nodes performing different tasks may generate a variety of asynchronous events. An asynchronous event may be expected or unexpected (e.g., occurring at a time that may not be predictable). Examples of asynchronous events may include, but are not limited, processing completion notifications, error notifications, equipment failure notifications, flow control notifications, etc. Asynchronous events may originate anywhere, may occur anytime and must be provided to at least nodes in the system that may be affected by the event.

US2012/0198477 discusses an event notification method for use in a distributed processing system to reduce queue space and event processing bandwidth.

US 2012/117361 A1 describes a system and method for an ESB (Enterprise Service Bus) for a distributed network, and in particular for an ESB having a fully distributed architecture.

### SUMMARY

The present invention is defined as the method of claim 1, the at least one machine readable medium of claim 8, and the device of claim 9. Various embodiments are defined in the dependent claims.

### BRIEF DESCRIPTION OF THE DRAWINGS

Features and advantages of various embodiments of the claimed subject matter will become apparent as the following Detailed Description proceeds, and upon reference to the Drawings, wherein like numerals designate like parts, and in which:
FIG. 1 illustrates an example system for event dissemination in accordance with at least one embodiment of the present disclosure;
FIG. 2 illustrates an example configuration for a device usable in accordance with at least one embodiment of the present disclosure;
FIG. 3 illustrates an example configuration for an event dissemination module (EDM) and example interaction that may occur between the EDM and other modules in a device in accordance with at least one embodiment of the present disclosure; and
FIG. 4 illustrates example operations for event dissemination in accordance with at least one embodiment of the present disclosure.

Although the following Detailed Description will proceed with reference being made to illustrative embodiments, many alternatives, modifications and variations thereof will be apparent to those skilled in the art.

### DETAILED DESCRIPTION

This disclosure is directed to a system for event dissemination. In general, a system may comprise a plurality of devices each including an event dissemination module (EDM) configured to disseminate events between the plurality of devices. New events may be generated during the normal course of operation in each of the plurality of devices. These events may be provided to at least one device designated as a network dispatch location. The network dispatch location may initiate the dissemination of the events. For example, each device may place received events into a local event queue within the device. The placement of an event into the local event queue may cause a counter in the EDM to increment. Incrementing the counter may, in turn, cause a trigger operation module in the EDM to perform at least one activity including, for example, forwarding the event to other devices within the plurality of devices. In at least one embodiment, resources may exist in the plurality of devices to support multiple dispatch paths for allowing events to be disseminated in different ways (e.g., to different device groups, in a different device order, etc.).

In at least one embodiment, an example device to operate in a system for event dissemination may comprise at least a communication module, a processing module, a local event queue and an EDM. The communication module may be to interact with a plurality of other devices. The processing module may be to process at least events. The EDM may be to receive an event into the device, place the event into the local event queue and disseminate the event from the local event queue to at least one other device in the plurality of other devices.

In at least one embodiment, the processing module may be to generate a new event in the device and cause the communication module to transmit the new event to at least one device in the plurality of devices that is designated as a network dispatch location. The local queue may, for example, reside in a memory in the event dissemination module or in a memory module in the device. The EDM may comprise, for example, at least a counter to increment when an event is placed into the local event queue. The EDM may also comprise at least a trigger operation module to perform at least one activity when the counter increments. The at least one activity may comprise disseminating the event from the local event queue to at least one other device in the plurality of other devices. In disseminating the event, the EDM may be to cause the communication module to transmit a message including the event to the at least one other device. The device may further comprise at least one of a plurality of event dissemination modules or a plurality of local event queues corresponding to a plurality of event dispatch paths, respectively. The plurality of event dispatch paths may each define a group of the plurality of devices through which events are disseminated.

Consistent with the present disclosure, a system for event dissemination may comprise a plurality of devices, each of the plurality of devices comprising a communication module to interact with other devices in the plurality of devices, a processing module to process at least events, a local event queue and an EDM to receive an event into the device, place the event into the local event queue and disseminate the event from the local event queue to at least one other device in the plurality of other devices. The system may be, for example, a high performance computing (HPC) system. At least one device in the plurality of devices may be designated as a network dispatch location to which new events are transmitted for dissemination. Each EDM may comprise, for example, at least a counter to increment when an event is placed into the local event queue. Each EDM may further comprise at least a trigger operation module to perform at least one activity when the counter increments. The at least one activity may comprise, for example, disseminating the event from the local event queue to at least one other device in the plurality of other devices. Consistent with the present disclosure, an example method for event dissemination may comprise receiving an event in a device, placing the event in a local queue in the device and causing an event dissemination module in the device to disseminate the event from the local event queue to at least one other device.

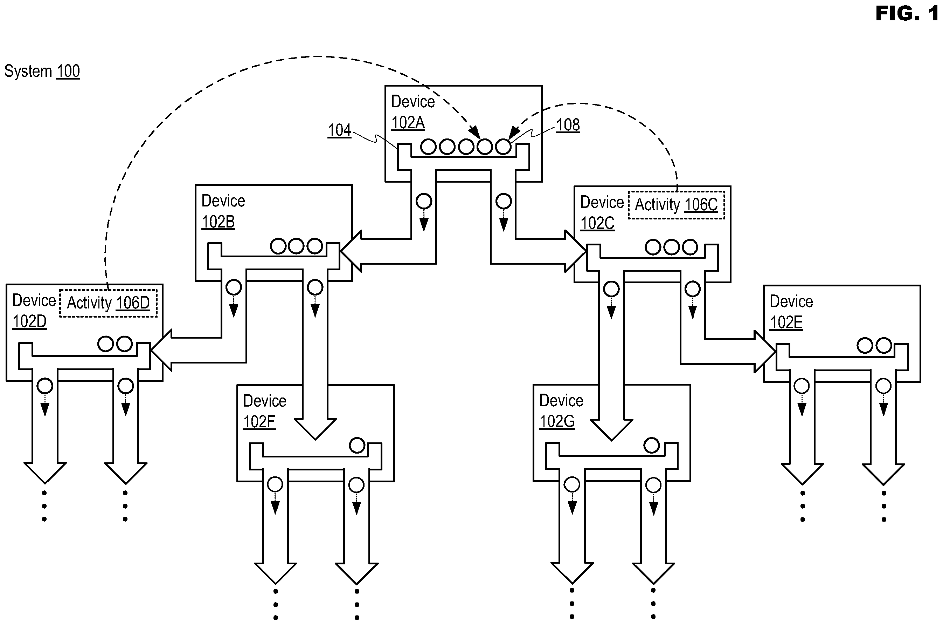

FIG. 1 illustrates an example system for event dissemination in accordance with at least one embodiment of the present disclosure. System 100 is illustrated as comprising a plurality of devices that may include, for example, device 102A, device 102B, device 102C, device 102D, device 102E, device 102F and device 102G (collectively, "devices 102A...G"). While seven (7) devices 102A...G are shown in FIG. 1, implementations of system 100 may comprise a smaller or larger number of devices 102A...G. Examples of devices 102A...G may include, but are not limited to, a mobile communication device such as a cellular handset or a smartphone based on the Android^{®} operating system(OS) from the Google Corporation, iOS^{®} or Mac OS^{®} from the Apple Corporation, Windows^{®} OS from the Microsoft Corporation, Tizen^{®} OS from the Linux Foundation, Firefox^{®} OS from the Mozilla Project, Blackberry^{®} OS from the Blackberry Corporation, Palm^{®} OS from the Hewlett-Packard Corporation, Symbian^{®} OS from the Symbian Foundation, etc., a mobile computing device such as a tablet computer like an iPad^{®} from the Apple Corporation, Surface^{®} from the Microsoft Corporation, Galaxy Tab^{®} from the Samsung Corporation, Kindle^{®} from the Amazon Corporation, etc., an Ultrabook^{®} including a low-power chipset from the Intel Corporation, a netbook, a notebook, a laptop, a palmtop, etc., a wearable device such as a wristwatch form factor computing device like the Galaxy Gear^{®} from Samsung, an eyewear form factor computing device/user interface like Google Glass^{®} from the Google Corporation, a virtual reality (VR) headset device like the Gear VR^{®} from the Samsung Corporation, the Oculus Rift^{®} from the Oculus VR Corporation, etc., a typically stationary computing device such as a desktop computer, a server, a group of computing devices organized in a high performance computing (HPC) architecture, a smart television or other type of "smart" device, small form factor computing solutions (e.g., for space-limited applications, TV set-top boxes, etc.) like the Next Unit of Computing (NUC) platform from the Intel Corporation, etc. Devices 102A...G in system 100 may be similarly configured or may be completely different devices. For the sake of explanation herein, an example implementation that may be utilized to better comprehend the various embodiments consistent with the present disclosure may include a rack or blade server installation wherein groups of servers are installed within a common chassis and linked by at least one network. In an example HPC computing environment, these groups of servers may be organized as a cluster with at least one master to manage operation of the cluster.

Existing systems for disseminating events within a collaborative computing environment are limited in that they require the operation of the devices within the computing environment to change to accommodate event notification. For example, event dissemination utilizing existing systems may take place via software-based messaging implemented by the main OS of a device 102A...G in which the event was generated, or through software-organized collective behavior. Requiring a device 102A...G to transmit event notifications to other devices 102A...G that may be interested in the event may place a substantial amount of processing and/or communication overhead on the device, and thus, may impact device performance, longevity, etc. A collective operation such as, for example, a broadcast collective operation defined in the Message Passing Interface (MPI) standard (http:/www.mpi-forum.org/docs/mpi-3.0/mpi30-report.pdf) works by implementing a software collective function in devices 102A...G wherein the event messages may not be allowed to progress until devices 102A...G call a particular function (e.g., a function that causes events to be delivered). In this manner, an asynchronous event can be "converted" into a synchronous event in that system 100 is forced to operate around the event. This forced synchronization of devices 102A...G interrupts operation of each device 102A...G, and thus, may negatively impact the overall operation of system 100.

Consistent with the present disclosure, system 100 is configured to disseminate events in a manner that is not disruptive to the individual operation of devices 102A...G. Dedicated event handling resources 104 in each device 102A...G may be responsible to receive and disseminate events throughout system 100. In at least one embodiment, event handling resources 104 may be implemented in hardware (e.g., firmware) so that operation may take place independently of OS-related and application-related operations that may also be occurring in devices 102A...G. In an example of operation, activities occurring in devices 102A...G, such as activity 106C in device 102C and activity 106D in device 102D may generate events 108. Activities 106C and 106D may be attributable to, for example, applications, utilities, services, etc. executing in devices 102C or 102D, the completion of a task related to a larger processing job being processed by system 100, a software error, an equipment failure, a flow control message, etc. In another example, device 102D may experience a software error or equipment failure and generate event 108 to notify other devices 102A...G in system 100 of the problem (e.g., so that corrective action may be taken). Events 108 may be forwarded to a network dispatch location. As referenced herein, a network dispatch location may be at least one device in system 100 configured to receive new events for dissemination throughout system 100. In the example of FIG. 1 device 102A is a network dispatch location. Event handling resources 104 in device 102A may receive and disseminate each event 108 (e.g., may dispatch each event 108 to devices 102B and 102C). In a similar manner, event handling resources in device 102B and device 102C may dispatch each event 108 to device 102D, device 102E, device 102F and device 102G. In this manner, devices 102A...G are arranged in a binary tree topology so that events provided to device 102A (e.g., the dispatch location) may flow downward through devices 102A...G. In at least one embodiment, event handling resources 104 may be separate from event processing that takes place in devices 102A...G. This means that event dissemination may be separate from any operations that may occur in devices 102A...G in response to a particular event 108.

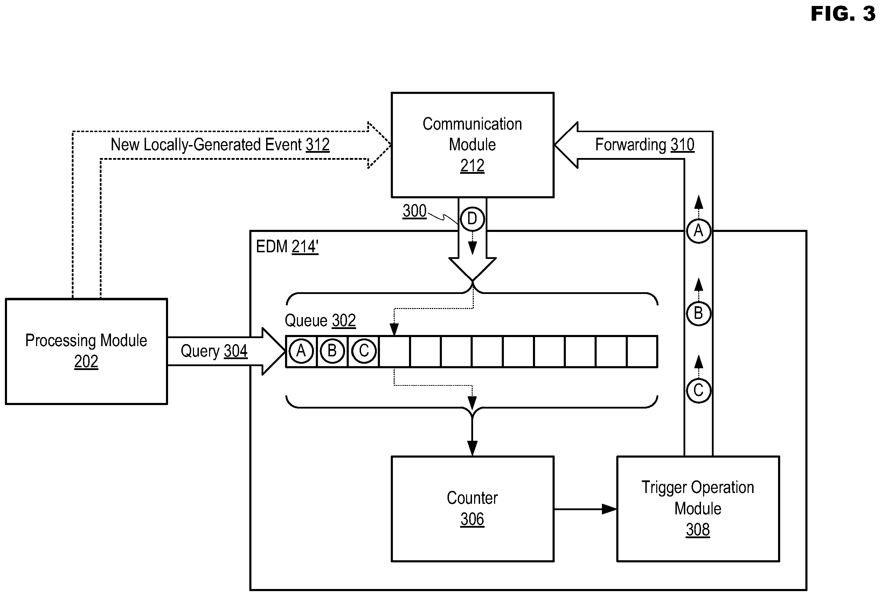

Consistent with the present disclosure, multiple dispatch paths may be defined in system 100. As referenced herein, a dispatch path may dictate the particular devices 102A...G to which event 108 will be disseminated (e.g., device 102B, device 102D, etc.) and/or the order of devices 102A...G through which event 108 will be disseminated (e.g., device 102A then device 102B then device 102D, etc.). Multiple dispatch paths may be employed when, for example, an event 108 is important only to certain devices 102A...G, when the dissemination of event 108 is time-sensitive for certain devices 102A...G, etc. Examples of methodologies and/or equipment for implementing multiple dispatch paths will be described in more detail with respect to FIG. 3.

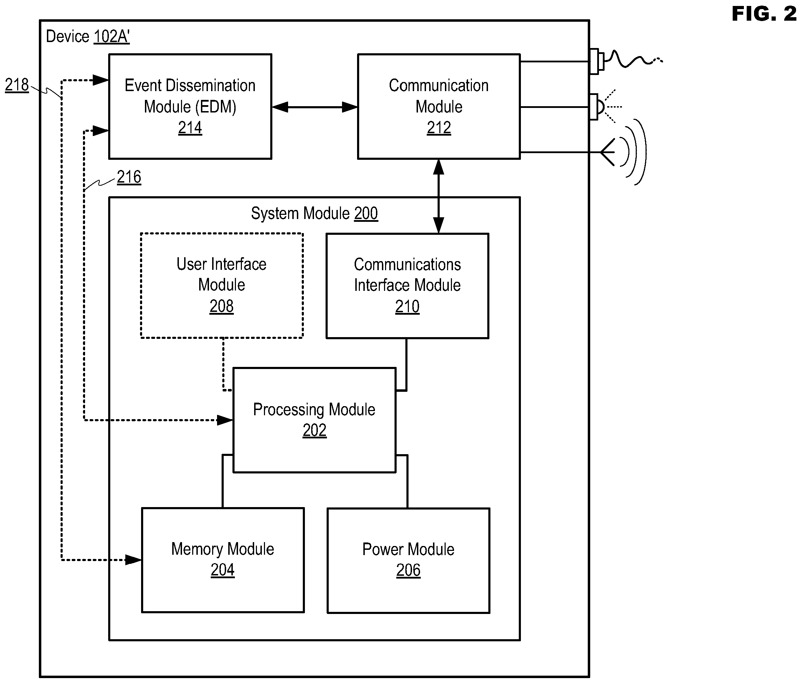

FIG. 2 illustrates an example configuration for a system usable in accordance with at least one embodiment of the present disclosure. The inclusion of an apostrophe after an item number (e.g., 100') in the present disclosure may indicate that an example embodiment of the particular item is being illustrated. For example, device 102A' may be capable of performing any or all of the activities disclosed in FIG. 1. However, device 102A' is presented herein only as an example of an apparatus usable in embodiments consistent with the present disclosure, and is not intended to limit any of the various embodiments disclosed herein to any particular manner of implementation. Moreover, while an example configuration for device 102A' is illustrated in FIG. 2, any or all of devices 102B...G may be configured in the same or a similar manner.

Device 102A' may comprise, for example, system module 200 to manage operation of the device. System module 200 may include, for example, processing module 202, memory module 204, power module 206, user interface module 208 and communication interface module 210. Device 102A' may further include communication module 212 and EDM 214. While communication module 212 and EDM 214 are illustrated as separate from system module 200, the example configuration shown in FIG. 2 has been provided herein merely for the sake of explanation. Some or all of the functionality associated with communication module 212 and EDM 214 may also be incorporated into system module 200.

In device 102A', processing module 202 may comprise one or more processors situated in separate components, or alternatively one or more processing cores in a single component (e.g., in a system-on-chip (SoC) configuration), along with processor-related support circuitry (e.g., bridging interfaces, etc.). Example processors may include, but are not limited to, various x86-based microprocessors available from the Intel Corporation including those in the Pentium, Xeon, Itanium, Celeron, Atom, Quark, Core i-series, Core M-series product families, Advanced RISC (e.g., Reduced Instruction Set Computing) Machine or "ARM" processors, etc. Examples of support circuitry may include chipsets (e.g., Northbridge, Southbridge, etc. available from the Intel Corporation) configured to provide an interface through which processing module 202 may interact with other system components that may be operating at different speeds, on different buses, etc. in device 102A' . Moreover, some or all of the functionality commonly associated with the support circuitry may also be included in the same physical package as the processor (e.g., such as in the Sandy Bridge family of processors available from the Intel Corporation).

Processing module 202 may be configured to execute various instructions in device 102A'. Instructions may include program code configured to cause processing module 202 to perform activities related to reading data, writing data, processing data, formulating data, converting data, transforming data, etc. Information (e.g., instructions, data, etc.) may be stored in memory module 204. Memory module 204 may comprise random access memory (RAM) and/or read-only memory (ROM) in a fixed or removable format. RAM may include volatile memory configured to hold information during the operation of device 102A' such as, for example, static RAM (SRAM) or Dynamic RAM (DRAM). ROM may include nonvolatile (NV) memory modules configured based on BIOS, UEFI, etc. to provide instructions when device 102A' is activated, programmable memories such as electronic programmable ROMs (EPROMS), Flash, etc. Other fixed/removable memory may include, but are not limited to, magnetic memories such as, for example, floppy disks, hard drives, etc., electronic memories such as solid state flash memory (e.g., embedded multimedia card (eMMC), etc.), removable memory cards or sticks (e.g., micro storage device (uSD), USB, etc.), optical memories such as compact disc-based ROM (CD-ROM), Digital Video Disks (DVD), Blu-Ray Disks, etc.

Power module 206 may include internal power sources (e.g., a battery, fuel cell, etc.) and/or external power sources (e.g., electromechanical or solar generator, power grid, external fuel cell, etc.), and related circuitry configured to supply device 102A' with the power needed to operate. User interface module 208 may include hardware and/or software to allow users to interact with device 102A' such as, for example, various input mechanisms (e.g., microphones, switches, buttons, knobs, keyboards, speakers, touch-sensitive surfaces, one or more sensors configured to capture images and/or sense proximity, distance, motion, gestures, orientation, biometric data, etc.) and various output mechanisms (e.g., speakers, displays, lighted/flashing indicators, electromechanical components for vibration, motion, etc.). The hardware in user interface module 208 may be incorporated within device 102A' and/or may be coupled to device 102A' via a wired or wireless communication medium. User interface module 208 may be optional in certain circumstances such as, for example, a situation wherein device 102A' is a server (e.g., rack server, blade server, etc.) that does not include user interface module 208, and instead relies on another device (e.g., a management terminal) for user interface functionality.

Communication interface module 210 may be configured to manage packet routing and other control functions for communication module 212, which may include resources configured to support wired and/or wireless communications. In some instances, device 102A' may comprise more than one communication module 212 (e.g., including separate physical interface modules for wired protocols and/or wireless radios) managed by a centralized communication interface module 210. Wired communications may include serial and parallel wired mediums such as, for example, Ethernet, USB, Firewire, Thunderbolt, Digital Video Interface (DVI), High-Definition Multimedia Interface (HDMI), etc. Wireless communications may include, for example, close-proximity wireless mediums (e.g., radio frequency (RF) such as based on the RF Identification (RFID)or Near Field Communications (NFC) standards, infrared (IR), etc.), short-range wireless mediums (e.g., Bluetooth, WLAN, Wi-Fi, etc.), long range wireless mediums (e.g., cellular wide-area radio communication technology, satellite-based communications, etc.), electronic communications via sound waves, etc. In one embodiment, communication interface module 210 may be configured to prevent wireless communications that are active in communication module 212 from interfering with each other. In performing this function, communication interface module 210 may schedule activities for communication module 212 based on, for example, the relative priority of messages awaiting transmission. While the embodiment disclosed in FIG. 2 illustrates communication interface module 210 being separate from communication module 212, it may also be possible for the functionality of communication interface module 210 and communication module 212 to be incorporated into the same module. Moreover, in another embodiment it may be possible for communication interface module 210, communication module 212 and processing module 202 to be incorporated in the same module.

Consistent with the present disclosure, EDM 214 may utilize communication module 212 to receive events 108 from, and disseminate events 108 to, other devices 102B...G operating in system 100. Acting in this manner, EDM 214 and communication module 212 may provide the general functionality described in regard to event handing resources 104. When device 102A' is designated as a network dispatch location, events 108 may be generated within device 102A' or received from other devices 102B...G via communication module 212. Following processing such as will be described in regard to FIG. 3, EDM 214 may cause communication module 212 to forward events 108 to other devices 102B...G. Part of this functionality may include storing received events 108 in a local event queue (hereafter, "queue"), an example of which is disclosed at 302 in FIG. 3. Consistent with the present disclosure, queue 302 may reside within a memory inside of EDM 214 or within general device memory (e.g., memory module 204). If queue 302 resides within EDM 214, then as shown at 216 processing module 202 may interact with EDM 214 to, for example, query the local event queue for events 108 that may be relevant to device 102A'. In an instance where an event 108 in queue 302 is determined to be relevant to device 102A', processing module 202 may process event 108, which may involve performing at least one activity in response to event 108 (e.g., requesting data from another device 102B...G that has acknowledged completion of a processing task, performing corrective action in response to an error, reassigning a processing task in regard to an equipment failure, etc.). In an example configuration where queue 302 resides in memory module 204, then EDM 214 may also interact with memory module 204, as shown at 218, to at least place received events 108 into queue 302.

FIG. 3 illustrates an example configuration for an event dissemination module (EDM) and example interaction that may occur between the EDM and other modules in a device in accordance with at least one embodiment of the present disclosure. With respect to FIG. 3, the disclosure may make reference to programmatic structures defined in the Portals specification (http://www.cs.sandia.gov/Portals/portals4-spec.html), and more particularly in the OpenMPI implementation over Portals (http://www.cs.sandia.gov/Portals/poftals4-libs.html). Consistent with the present disclosure, the elements depicted in FIG. 3 may be used to efficiently implement flow control event dissemination in OpenMPI over Portals. While OpenMPI over Portals is able to employ a broadcast tree having a fixed root to alert nodes of a flow control event, such an implementation cannot support disseminating data as part of an event (not even the source of the event), and thus, Portals is limited only to disseminating flow control events. In addition, Portals may only support receiving one event at a time before software gets involved. Implementations consistent with the present disclosure may disseminate events 108 comprising data such as event identification (event_id) and may allow for the asynchronous reception of multiple events 108.

EDM 214' may comprise, for example, local event queue 302, counter 306 and trigger operation module 308. In at least one embodiment, queue 302 may be a memory buffer with an offset that may be managed locally by a network interface such as, for example, communications interface module 210 and/or communication module 212. In OpenMPI over Portals terminology, an application program interface (API) utilized to manage queue 302 may be a PTL_ME_MANAGE_LOCAL type of match entry. Counter 306 may be attached to queue 302 and may count the number of events 108 received into the queue. Events 108 may be messages comprising a small fixed size structure, and thus, all events 108 appended into queue 302 may be of the same size. Counter 306 may be configured to interact with trigger operation module 308. Trigger operation module 308 may comprise at least one triggered operation (e.g., PtlTriggeredPut() operations in OpenMPI over Portals terminology). The triggered "puts" may be configured to execute on each increment of counter 306. The source buffer for the triggered put may be set to an entry in queue 302 corresponding to the counter value at which the put triggers. The destination for each triggered put operation (e.g., at least one device 102A...G) may be predetermined based on the particular topology used.

An example of operation will now be disclosed in regard to FIG. 3. New events may be received via communication module 212 as shown at 300. At various times (e.g., periodically, based on the reception of a new event, etc.) processing module 202 (e.g., or an application being executed by processing module 202) may query queue 302 to check for new events 108 as shown at 304. Processing module 202 may react to events that are determined to be relevant to the local device. In one embodiment, confirmation of a locally generated event 108 being disseminated in system 100 may be realized when processing module 202 determines that an event 108 added to queue 302 through dissemination operations originated locally (e.g., event 108 has come "full circle"). As events 108 (e.g., A, B, C, D) are placed into queue 302, counter 306 may increment. As counter 302 increments, triggered operations in trigger operation module 308 may cause the events to be forwarded to other modules as shown at 310. Also illustrated in FIG. 3, processing module 202 may generate events 108 locally, and may forward locally-generated events 108 to communication module 212, as shown at 312, for transmission to a network dispatch location.

In practical applications consistent with the present disclosure, all event messages may be required to be the same size and smaller than the max_waw_ordered_size, as defined in Portals, which may be the rendezvous size cutoff (e.g. 4kB). A Host Fabric Interface (HFI) may be, for example, an instance of communications interface module 210 and/or communication module 212 (e.g., possibly in the form of a network interface card or "NIC"), and may provide ordering guarantees that are strong enough for this mechanism to always work. However, some HFIs might not be able to provide a guarantee of success, even if the mechanism almost always works. In such instances, queue 302 may be pre-initialized to a known value (e.g., all zeroes). Some event values may be reserved to indicate invalid events. In the unlikely case of an invalid event, a correct value may be recovered by re-reading the event either from queue 302, or from a queue at the network dispatch location (e.g., device 102A). Embodiments consistent with the present disclosure may also provide a way to efficiently implement an OpenSHMEM event extension (www.openshmem.org) that is based on Cray's SHMEM Event extension. In most use cases, event 108 may originate in software. However, it is possible to implement embodiments consistent with the present disclosure to handle hardware events. For example, a triggered put may be employed to initiate hardware-based event dissemination. In at least one embodiment, the devices 102A...G to which events 108 are disseminated (e.g., via triggered operations) may be configured in firmware. Thus, trigger operation module 308 may be at least partially firmware, and reconfiguration of a dispatch path may require initialization of a device 102A...G in which trigger operation module 308 resides. The dynamic configuration of dispatch paths may be performed in devices 102A...G by, for example, configuring resources in devices 102A...G to recognize or ignore events 108 based on origin, type, criticality, etc. In this manner, devices 102A...G may be configured to disseminate or ignore certain events 108.

In at least one embodiment, more than one dispatch path may be implemented in system 100 potentially covering different subsets of devices 102A...G. In this manner, multiple publish subscription pattern (pub-sub) networks may be implemented. Multiple dispatch paths may be implemented using a variety of different mechanisms. For example, different devices 102A...G may serve as network dispatch locations for different dispatch paths. Events 108 that are to be disseminated to a subset of devices 102A...G may be transmitted to a network dispatch location corresponding to the certain subset of devices 102A...G. Alternatively, multiple instances of EDM 214', or at least queue 302, corresponding to multiple dispatch paths may reside in devices 102A...G. For example, an event 108 may be received by a certain instance of EDM 214' or may be placed into a certain queue 302 corresponding to a targeted subset of devices 102A...G. As counter 306 increments, triggered operations may execute relative to the certain instance of EDM 214' or queue 302 to disseminate event 108 to the targeted subset of devices 102A...G.

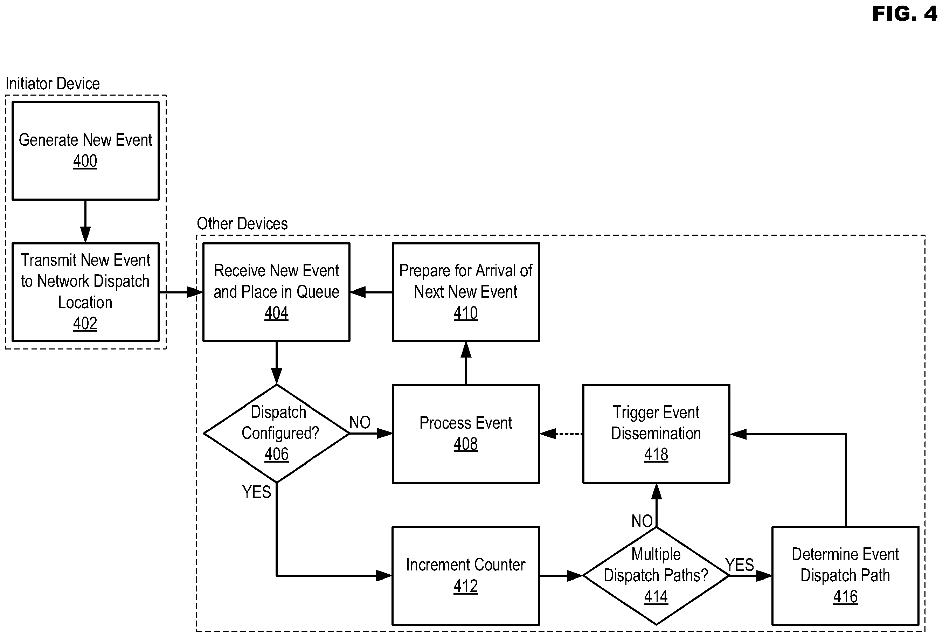

FIG. 4 illustrates example operations for event dissemination in accordance with at least one embodiment of the present disclosure. Operations 400 and 402 may occur in an "initiator" device (e.g., a device where an event originates) in a system comprising a plurality of devices. In operation 400 a new event may be generated in the initiator device. The new event may then be transmitted to a network dispatch location in operation 402. Operation 404 to 416 may occur in other devices within the system. In operation 404 a new event is received in a device and placed in a queue. A determination is made in operation 406 as to whether the device is configured to dispatch events. For example, a device that is at the bottom of a binomial tree structure formed with the devices in the system may not be configured to disseminate events. If in operation 406 it is determined that dispatch is not configured in the device, then in operation 408 the device may process any events in the queue that are relevant locally (e.g., to the device itself) and may prepare for the arrival of the next new event in operation 410. Operation 410 may be followed by a return to operation 404 when a new event in received in the device.

If in operation 406 it is determined that dispatch is configured, then in operation 412 a counter in the device is incremented and in operation 414 a further determination is made as to whether multiple dispatch paths are configured in the device. If in operation 414 it is determined that multiple dispatch paths are configured, then in operation 416 a particular event dispatch path to utilize for the event received in operation 404 is determined. A particular event dispatch may be determined based on, for example, a particular subset of devices in the system to which the event to be disseminated may be relevant. Following a determination in operation 414 that multiple dispatch paths do not exist in the device, or alternatively following operation 416, in operation 418 event dissemination is triggered (e.g., at least one trigger operation may occur). Event dissemination in operation 418 may optionally be followed by a return to operation 408 to process events residing in the queue.

While FIG. 4 illustrates operations according to an embodiment, it is to be understood that not all of the operations depicted in FIG. 4 are necessary for other embodiments. Indeed, it is fully contemplated herein that in other embodiments of the present disclosure, the operations depicted in FIG. 4, and/or other operations described herein, may be combined in a manner not specifically shown in any of the drawings, but still fully consistent with the present disclosure. Thus, claims directed to features and/or operations that are not exactly shown in one drawing are deemed within the scope and content of the present disclosure.

As used in this application and in the claims, a list of items joined by the term "and/or" can mean any combination of the listed items. For example, the phrase "A, B and/or C" can mean A; B; C; A and B; A and C; B and C; or A, B and C. As used in this application and in the claims, a list of items joined by the term "at least one of' can mean any combination of the listed terms. For example, the phrases "at least one of A, B or C" can mean A; B; C; A and B; A and C; B and C; or A, B and C.

As used in any embodiment herein, the terms "system" or "module" may refer to, for example, software, firmware and/or circuitry configured to perform any of the aforementioned operations. Software may be embodied as a software package, code, instructions, instruction sets and/or data recorded on non-transitory computer readable storage mediums. Firmware may be embodied as code, instructions or instruction sets and/or data that are hard-coded (e.g., nonvolatile) in memory devices. "Circuitry", as used in any embodiment herein, may comprise, for example, singly or in any combination, hardwired circuitry, programmable circuitry such as computer processors comprising one or more individual instruction processing cores, state machine circuitry, and/or firmware that stores instructions executed by programmable circuitry. The modules may, collectively or individually, be embodied as circuitry that forms part of a larger system, for example, an integrated circuit (IC), system on-chip (SoC), desktop computers, laptop computers, tablet computers, servers, smartphones, etc.

Any of the operations described herein may be implemented in a system that includes one or more storage mediums (e.g., non-transitory storage mediums) having stored thereon, individually or in combination, instructions that when executed by one or more processors perform the methods. Here, the processor may include, for example, a server CPU, a mobile device CPU, and/or other programmable circuitry. Also, it is intended that operations described herein may be distributed across a plurality of physical devices, such as processing structures at more than one different physical location. The storage medium may include any type of tangible medium, for example, any type of disk including hard disks, floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic and static RAMs, erasable programmable read-only memories (EPROMs), electrically erasable programmable read-only memories (EEPROMs), flash memories, Solid State Disks (SSDs), embedded multimedia cards (eMMCs), secure digital input/output (SDIO) cards, magnetic or optical cards, or any type of media suitable for storing electronic instructions. Other embodiments may be implemented as software modules executed by a programmable control device.

Thus, this disclosure is directed to a system for event dissemination. In general, a system may comprise a plurality of devices each including an event dissemination module (EDM) configured to disseminate events between the plurality of devices. New events may be generated during the normal course of operation in each of the plurality of devices. These events may be provided to at least one device designated as a network dispatch location. The network dispatch location may initiate the dissemination of the events. For example, each device may place received events into a local event queue within the device. The placement of an event into the local event queue may cause a counter in the EDM to increment. Incrementing the counter may, in turn, cause a trigger operation module in the EDM to perform at least one activity including, for example, forwarding the event to other devices within the plurality of devices.

## Claims

1. A method for asynchronous event dissemination at a device (102) of a plurality of devices (102) arranged in a binary tree topology, said device adapted to have a local event queue (302) and having a processing module (202) configured to process events from the local event queue (302), the method comprising:
receiving (404) an event (108; 300) into the device (102);
placing (404) the event (108; 300) in the local event queue (302) in the device (102);
determining (406) if the device (102) is configured to dispatch events;
if it is determined that the device (102) is configured to dispatch events, incrementing (412) a counter (306) when the event is placed into the local event queue and determining (414) if multiple dispatch paths are configured in the device (102);
if it is determined that multiple dispatch paths are configured in the device (102), determining (416) an event dispatch path comprising a group of the plurality of devices arranged in a binary tree topology to which the event is to be disseminated; and
causing (416) an event dissemination module (214) in the device (102) to disseminate the event (108; 300) from the local event queue (302) to at least one other device (102) of the determined event dispatch path, wherein disseminating the event comprises transmitting a message including the event to the at least one other device, and wherein event dissemination operations are triggered based on incrementing the counter (306).

2. The method of claim 1, wherein the method further comprises: disseminating or ignoring the event based on one or more of the event's origin, type, or criticality.

3. The method of claim 1, wherein the method further comprises: causing the processing module (202) to:
generate a new event in the device; and
cause a communication module (212) of the device (102) to transmit the new event to at least one device in the plurality of other devices that is designated as a network dispatch location (102A).

4. The method of claim 1, wherein the method further comprises: causing the the local event queue to reside in a memory in the event dissemination module or in a memory module in the device.

5. The method of claim 1, wherein the event dissemination operations comprise disseminating the event from the local event queue to at least one other device in the plurality of other devices.

6. The method of claim 1, wherein causing the event dissemination module in the device to disseminate the event comprises:
determining if multiple event dispatch paths exist in the device; and
if multiple event dispatch paths are determined to exist in the device, determining at least one event dispatch path to utilize in disseminating the event.

7. The method of any preceding claim, wherein determining an event dispatch path further comprises: determining the event dispatch path from one of a plurality of event dispatch paths each defining a group of the plurality of other devices through which events are disseminated.

8. At least one machine readable medium comprising a plurality of instructions that, in response to be being executed on a computing device, cause the computing device to carry out the method according to any of the claims 1 to 7.

9. A device (102) comprising means for carrying out the steps of the method of any one of claims 1 to 7.

10. A system for asynchronous event dissemination, comprising the device of claim 9.

## Patentansprüche

1. Verfahren zur asynchronen Ereignisweitergabe bei einer Vorrichtung (102) von mehreren Vorrichtungen (102), die in einer Binärbaumtopologie angeordnet sind, wobei die Vorrichtung ausgelegt ist, eine lokale Ereigniswarteschlange (302) aufzuweisen, und ein Verarbeitungsmodul (202) aufweist, das konfiguriert ist, Ereignisse aus der lokalen Ereigniswarteschlange (302) zu verarbeiten, wobei das Verfahren Folgendes umfasst:
Empfangen (404) eines Ereignisses (108; 300) in der Vorrichtung (102);
Anordnen (404) des Ereignisses (108; 300) in der lokalen Ereigniswarteschlange (302) in der Vorrichtung (102) ;
Bestimmen (406), ob die Vorrichtung (102) konfiguriert ist, Ereignisse zu versenden;
dann, wenn bestimmt wird, dass die Vorrichtung (102) konfiguriert ist, Ereignisse zu versenden, Inkrementieren (412) eines Zählers (306), wenn das Ereignis in der lokalen Ereigniswarteschlange angeordnet wird, und Bestimmen (414), ob in der Vorrichtung (102) mehrere Versandwege konfiguriert sind;
dann, wenn bestimmt wird, dass in der Vorrichtung (102) mehrere Versandwege konfiguriert sind, Bestimmen (416) eines Ereignisversandwegs, der eine Gruppe der mehreren Vorrichtungen, die in einer Binärbaumtopologie angeordnet sind, an die das Ereignis weitergegeben werden soll, umfasst; und
Bewirken (416), dass ein Ereignisweitergabemodul (214) in der Vorrichtung (102) das Ereignis (108; 300) aus der lokalen Ereigniswarteschlange (302) an mindestens eine andere Vorrichtung (102) des bestimmten Ereignisversandwegs weitergibt, wobei das Weitergeben des Ereignisses das Übertragen einer Nachricht, die das Ereignis enthält, an die mindestens eine andere Vorrichtung umfasst und wobei Ereignisweitergabevorgänge auf der Grundlage des Inkrementierens des Zählers (306) ausgelöst werden.

2. Verfahren nach Anspruch 1, wobei das Verfahren ferner Folgendes umfasst: Weitergeben oder Ignorieren des Ereignisses auf der Grundlage des Ursprungs und/oder der Art und/oder der Wichtigkeit des Ereignisses.

3. Verfahren nach Anspruch 1, wobei das Verfahren ferner Folgendes umfasst: Bewirken, dass das Verarbeitungsmodul (202) Folgendes durchführt:
Erzeugen eines neuen Ereignisses in der Vorrichtung; und
Bewirken, dass ein Kommunikationsmodul (212) der Vorrichtung (102) das neue Ereignis an mindestens eine Vorrichtung in der Mehrzahl der anderen Vorrichtungen überträgt, die als ein Netzversandort (102A) gekennzeichnet ist.

4. Verfahren nach Anspruch 1, wobei das Verfahren ferner Folgendes umfasst: Bewirken, dass die lokale Ereigniswarteschlange in einem Speicher im Ereignisweitergabemodul oder in einem Speichermodul in der Vorrichtung gehalten wird.

5. Verfahren nach Anspruch 1, wobei die Ereignisweitergabevorgänge das Weitergeben des Ereignisses aus der lokalen Ereigniswarteschlange an mindestens eine andere Vorrichtung in der Mehrzahl der anderen Vorrichtungen umfassen.

6. Verfahren nach Anspruch 1, wobei das Bewirken, dass das Ereignisweitergabemodul in der Vorrichtung das Ereignis weitergibt, Folgendes umfasst:
Bestimmen, ob in der Vorrichtung mehrere Ereignisversandwege vorhanden sind; und
dann, wenn bestimmt wird, dass in der Vorrichtung mehrere Ereignisversandwege vorhanden sind, Bestimmen mindestens eines Ereignisversandwegs, der beim Weitergeben des Ereignisses genutzt werden soll.

7. Verfahren nach einem der vorhergehenden Ansprüche, wobei das Bestimmen eines Ereignisversandwegs ferner Folgendes umfasst: Bestimmen des Ereignisversandwegs aus einem von mehreren Ereignisversandwegen, die jeweils eine Gruppe der mehreren anderen Vorrichtungen definieren, durch die Ereignisse weitergegeben werden.

8. Mindestens ein maschinenlesbares Medium, das mehrere Anweisungen umfasst, die als Antwort darauf, dass sie auf einer Rechenvorrichtung ausgeführt werden, bewirken, dass die Rechenvorrichtung das Verfahren nach einem der Ansprüche 1 bis 7 ausführt.

9. Vorrichtung (102), die Mittel zum Ausführen der Schritte des Verfahrens nach einem der Ansprüche 1 bis 7 umfasst.

10. System zur asynchronen Ereignisweitergabe, das die Vorrichtung nach Anspruch 9 umfasst.

## Revendications

1. Procédé de dissémination asynchrone d'événements au niveau d'un dispositif (102) parmi une pluralité de dispositifs (102) agencés dans une topologie d'arbre binaire, ledit dispositif étant adapté à disposer d'une file d'attente d'événements locale (302) et étant pourvu d'un module de traitement (202) configuré pour traiter des événements provenant de la file d'attente d'événements locale (302), le procédé comprenant :
la réception (404) d'un événement (108 ; 300) dans le dispositif (102) ;
le placement (404) de l'événement (108 ; 300) dans la file d'attente d'événements locale (302) dans le dispositif (102) ;
la détermination (406) si le dispositif (102) est configuré pour distribuer des événements ;
s'il est déterminé que le dispositif (102) est configuré pour distribuer des événements, l'incrémentation (412) d'un compteur (306) lorsque l'événement est placé dans la file d'attente d'événements locale et la détermination (414) si des chemins de distribution multiples sont configurés dans le dispositif (102) ;
s'il est déterminé que des chemins de distribution multiples sont configurés dans le dispositif (102), la détermination (416) d'un chemin de distribution d'événement comprenant un groupe de la pluralité de dispositifs agencés dans une topologie d'arbre binaire vers lequel l'événement doit être disséminé ; et
la commande (416) à un module de dissémination d'événement (214) dans le dispositif (102) de disséminer l'événement (108 ; 300) depuis la file d'attente d'événements locale (302) vers au moins un autre dispositif (102) du chemin de distribution d'événement déterminé, la dissémination de l'événement comprenant la transmission d'un message indiquant l'événement à l'au moins un autre dispositif, et des opérations de dissémination d'événement étant déclenchées sur la base de l'incrémentation du compteur (306) .

2. Procédé selon la revendication 1, le procédé comprenant en outre : la dissémination ou la mise à l'écart du message sur la base de l'origine et/ou du type et/ou de la criticité de l'événement.

3. Procédé selon la revendication 1, le procédé comprenant en outre : la commande au module de traitement (202) de :
générer un nouvel événement dans le dispositif ; et
commander au module de communication (212) du dispositif (102) de transmettre le nouvel événement à au moins un dispositif dans la pluralité d'autres dispositifs qui est désigné comme un emplacement de distribution de réseau (102A).

4. Procédé selon la revendication 1, le procédé comprenant en outre : l'implantation de la file d'attente d'événements locale dans une mémoire dans le module de dissémination d'événement ou dans un module de mémoire dans le dispositif.

5. Procédé selon la revendication 1, dans lequel les opérations de dissémination d'événement comprennent la dissémination de l'événement depuis la file d'attente d'événements locale vers au moins un autre dispositif dans la pluralité d'autres dispositifs.

6. Procédé selon la revendication 1, dans lequel la commande au module de dissémination d'événement dans le dispositif de disséminer l'événement comprend :
la détermination si des chemins de distribution d'événement multiples existent dans le dispositif ; et
s'il est déterminé que des chemins de distribution d'événement multiples existent dans le dispositif, la détermination d'au moins un chemin de distribution d'événement à utiliser pour la dissémination de l'événement.

7. Procédé selon l'une quelconque des revendications précédentes, dans lequel la détermination d'un chemin de distribution d'événement comprend en outre : la détermination du chemin de distribution d'événement à partir d'un parmi une pluralité de chemins de distribution d'événement définissant chacun un groupe de la pluralité d'autres dispositifs par le biais duquel des événements sont disséminés.

8. Support(s) lisible(s) par machine comprenant une pluralité d'instructions qui, en réponse à leur exécution sur un dispositif informatique, amènent le dispositif informatique à mettre en œuvre le procédé selon l'une quelconque des revendications 1 à 7.

9. Dispositif (102) comprenant des moyens de mise en œuvre des étapes du procédé selon l'une quelconque des revendications 1 à 7.

10. Système de dissémination asynchrone d'événements, comprenant le dispositif selon la revendication 9.
